# EUROPÄISCHE PATENTSCHRIFT

(11) **EP 2 131 962 B1**
(45) Veröffentlichungstag und Bekanntmachung des Hinweises auf die Patenterteilung: **20.07.2016**
(21) Anmeldenummer: 08716581.7
(22) Anmeldetag: 17.03.2008
(51) Int. Cl.: A45D 34/04, B29C 45/16, B65D 83/20, B65D 83/56

(54) **ABGABEVORRICHTUNG**
DISPENSING DEVICE
DISPOSITIF DISTRIBUTEUR

(30) Priorität: 15.03.2007 DE 102007013130; 17.10.2007 DE 102007049614
(43) Veröffentlichungstag der Anmeldung: 16.12.2009
(73) Patentinhaber: Aptar Dortmund GmbH, 44319 Dortmund (DE)
(72) Erfinder: BLUMENSTEIN, Bernd, 44339 Dortmund (DE); NEUHAUS, Reinhard, 58675 Hemer (DE); CANFIELD, Reiker, Crystal Lake, IL 60014 (US)
(74) Vertreter: Von Rohr Patentanwälte Partnerschaft mbB
(86) Internationale Anmeldenummer: PCT/EP2008/002117
(87) Internationale Veröffentlichungsnummer: WO 2008/110387

(56) Entgegenhaltungen:
- EP-A- 0 908 395
- EP-A- 0 930 102
- EP-A- 1 637 232
- EP-A1- 0 905 037
- WO-A-02/079679
- DE-A1- 19 851 659
- DE-A1-102005 025 371
- DE-U1- 9 307 083
- FR-A- 2 654 079
- FR-A1- 2 785 222
- NL-A- 7 507 833
- US-A- 3 991 916
- US-A- 5 301 850
- US-A1- 2008 110 941

## Beschreibung

Die vorliegende Erfindung betrifft eine Abgabevorrichtung für eine vorzugsweise kosmetische Flüssigkeit gemäß dem Oberbegriff des Anspruchs 1.

Unter dem Begriff "Abgabevorrichtung" ist bei der vorliegenden Erfindung insbesondere ein Abgabekopf zu verstehen, der vorzugsweise insbesondere an einem Behälter bzw. dessen Abgabeventil öder an einer handbetätigten Pumpe angebracht oder anbringbar ist. Insbesondere kann es ich auch um einen Druckbehälter, eine Spenderpumpe o. dgl. handeln. Die Abgabevorrichtung dient vorzugsweise der nicht-sprühenden Aus- bzw. Abgabe einer vorzugsweise kosmetischen Flüssigkeit. Jedoch kann es sich auch um eine Dosierpumpe bzw. handbetätigte Pumpe oder jede sonstige Abgabevorrichtung, wie einen Behälter, Abgabe- oder Sprühkopf, Spender oder dergleichen, insbesondere für eine kosmetische Flüssigkeit, handeln.

Unter dem Begriff "kosmetische Flüssigkeit" sind in einem engeren Sinn Kosmetika, Haarspray, Haarlack, ein Deodorant, ein Schaum, insbesondere Rasierschaum, ein Gel, ein Farbspray, ein Sonnen- oder Hautpflegemittel o. dgl. zu verstehen. Vorzugsweise werden in einem weiteren Sinn aber auch sonstige Körperpflegeprodukte, Reinigungsprodukte, o. dgl., und auch Suspensionen und Fluide, insbesondere mit Gasphasen, umfaßt. Weiter können als sonstige Flüssigkeiten, beispielsweise Luftverbesserer, und insbesondere auch technische Flüssigkeiten und Fluide, wie Rostlöser o. dgl., eingesetzt werden. Nachfolgend wird jedoch aus Vereinfachungsgründen und aufgrund des Nutzungsschwerpunkts oft nur von kosmetischer Flüssigkeit gesprochen.

Bei heutigen Abgabevorrichtungen zur Abgabe von insbesondere aufschäumenden oder aufgeschäumten Flüssigkeiten, wie Rasierschaum, oder bei Spenderpumpen besteht häufig das Problem, daß die Flüssigkeiten bzw. daraus gebildete Produkte nach Beendigung der eigentlichen Abgabe nachträglich austreten, insbesondere nachschäumen oder nachtropfen. Dieses Problem ist besonders bei Rasierschaum o. dgl. eklatant, tritt jedoch auch bei nicht aufgeschäumten bzw. nicht aufschäumenden Flüssigkeiten auf und kann insbesondere zu unerwünschten Verschmutzungen der Abgabevorrichtungen führen.

Die EP 0 442 858 B1 offenbart eine Abgabevorrichtung mit einem Unterteil und einem elastischen Oberteil. Zwischen dem Oberteil und dem Unterteil sind eine Pumpkammer und ein sich durch den Flüssigkeitsdruck öffnendes Auslaßventil gebildet. Durch Niederdrücken des Oberteils ist eine Flüssigkeit aus der Pumpkammer verdrängbar und über das Auslaßventil abgebbar. Anschließend erfolgt ein selbsttätiges elastisches Schließen des Auslaßventils und Rückstellen des Oberteils, wobei neue Flüssigkeit in die Pumpkammer gesaugt wird. Es ist schwierig, das Oberteil mit dem Unterteil dicht zu verbinden und ein geeignetes Material für das Oberteil zu finden, um die gewünschten Eigenschaften - insbesondere hohe chemische Beständigkeit und hohe Rückstellkräfte - zu erreichen.

Die WO 01/025116 A1, die den Ausgangspunkt der vorliegenden Erfindung bildet, offenbart einen Abgabekopf für einen unter Druck stehenden Behälter. Bei Betätigung des Abgabekopfes wird ein Abgabeventil des Behälters geöffnet, um einen Schaum oder ein Gel über einen im Abgabekopf gebildeten Auslaßkanal auszugeben. Der Auslaßkanal ist auslaßseitig mit einem Auslaßventil versehen, um ein Nachschäumen bzw. Nachtropfen nach Betätigung des Abgabekopfes zu verhindern. Das Auslaßventil ist insbesondere als selbstschließendes Schlitzventil ausgeführt. In der Praxis hat sich gezeigt, daß ein derartiges Ventil nicht zufriedenstellend schließt. Des weiteren ist die Herstellung des Abgabekopfes schwierig, da das Auslaßventil als separates Teil hergestellt und anschließend dicht eingebaut werden muß.

Die DE 10 2005 025 371 A1 betrifft eine Vorrichtung zur Abgabe eines vorzugsweise kosmetischen Fluids. Die Vorrichtung weist ein Ventil mit einem Ventilsitz und einem Ventilelement auf. Das Ventilelement ist gegen dem Ventilsitz gespritzt und durch Hinterschneidung mit dem Bauteil bzw. Ventilsitz verbunden.

Die DE 198 51 659 A1 betrifft eine Abgabevorrichtung für ein Fluid. Die Vorrichtung ist auf ein Ventilelement einer Sprühdose setzbar und weist ein Abgabeventil auf. Das Abgabeventil weist ein hohlzylinderartiges Ventilelement auf, wobei das Ventilelement einen Ventilsitz umhüllt. Durch Fluiddruck entsteht ein Abgabespalt, der sich bei Entlastung wieder schließt.

Die WO 02/079679 A1 beschreibt ein Abgabeventil für eine Sprühdose. Das Ventil weist ein rohrförmiges, elastisches Ventilelement und einen Ventilsitz auf. Durch Fluiddruck entsteht ein Abgabespalt, der sich bei Entlastung wieder schließt.

In der US 3,991,916 A1 wird ein Verschluss für ein Druckbehälter zur Ausgabe eines Produkts beschrieben. Der Verschluss wird durch ein sogenanntes "Entenschnabelventil" gebildet. Das Venitl kann eine geschlossene und eine offene Position aufweisen, wobei Überführung in die jeweils andere Position nur durch Krafteinwirkung erreichbar ist. In einer Ausführungsform weist der Verschluss einen bewegbaren, vorgespannten Anschlag auf, der das Ventil dichtet.

Die FR 2 785 222 A1 betrifft ein Abgabeventil eines Abgabekopfes zur Ausgabe eines Fluides. Das Abgabeventil weist ein hohlzylinderartiges Ventilelement auf, wobei das Ventilelement einen Ventilsitz umhüllt. Durch Fluiddruck entsteht ein Abgabespalt, der sich bei Entlastung wieder schließt.

Die DE 93 07 083 U1 betrifft einen selbstschließenden Verschluss für Behältnisse, wobei durch Druck auf eine elastische Wandung der Verschluss geöffnet wird. Ein Steg eines Verstärkungstellers wird durch ein angespritztes, weicheres Material umschlossen. Bei Druck auf das Behältnis wird ein Teil des Tellers elastisch nach oben geschwenkt und eine Öffnung freigegeben.

In der EP 0 905 037 A1 wird ein Abgabekopf für einen Druckbehälter beschrieben. Ein rohrförmiges Ventilelement wird bereichsweise an ein Gehäuseteil angespritzt. Durch Umbördeln des Ventilelements ergibt sich eine Hülle, die am Gehäuseteil einer Abgabeöffnung elastisch verschließt.

Der vorliegenden Erfindung liegt die Aufgabe zugrunde, eine verbesserte Abgabevorrichtung anzugeben, so daß bei einfachem, kostengünstigem Aufbau ein verbesserter Ventilaufbau ermöglicht wird.

Die obige Aufgabe wird durch eine Abgabevorrichtung gemäß Anspruch 1 gelöst. Vorteilhafte Weiterbildungen sind Gegenstand der Unteransprüche.

Ein Aspekt der vorliegenden Erfindung liegt darin, daß das Ventilelement eines Ventils, insbesondere eines Auslaßventils, an eine Wandung angespritzt ist und/oder darauf bei geschlossenem Ventil vollflächig oder flachseitig aufliegt. Das Öffnen des Ventils erfolgt dann insbesondere durch bereichsweises Abheben des Ventilelements von der Wandung, So wird ein sehr einfacher Ventilaufbau mit besonders guten Schließeigenschaften ermöglicht.

Alternativ oder zusätzlich deckt das Ventilelement eine in der Wandung bzw. in einem Bauteil gebildete Auslaßöffnung flachseitig ab. Dies gestattet ebenfalls einen besonders einfachen, gut schließenden Ventilaufbau.

Ein weiterer Aspekt der vorliegenden Erfindung liegt darin, daß die Abgabevorrichtung einen Anschlag aufweist, der das Ventilelement bei geschlossenem Ventil in die Schließstellung drückt oder vorspannt. Hierdurch wird bei einfachem Ventilaufbau ein besonders gutes Schließen des Ventils sichergestellt.

Besonders bevorzugt ist eine Kombination des Anschlags mit der vorgenannten Ausbildung des Ventilelements und/oder mit einem zum Öffnen des Ventils elastisch verformbaren Ventilelement, dessen elastische Rückstellkräfte in Schließrichtung wirken, um ein besonders dicht bzw. sicher schließendes Ventil zu erreichen und/der ein nachträgliches Austreten eines Produkts nach Beendigung der Betätigung zu vermeiden oder minimieren.

Ein weiterer Aspekt liegt darin, die Verbindung von zwei Materialien, insbesondere gleichen oder unterschiedlichen Kunststoffen, dadurch zu ermöglichen, daß ein Material bzw. dessen Oberfläche vorbehandelt wird, so daß das andere Material insbesondere unmittelbar gegen das erste Material gespritzt und dadurch mit diesem verbunden werden kann. Besonders bevorzugt sind dann keine weiteren Maßnahmen, Bearbeitungen, Haftvermittler o. dgl. erforderlich. Die Vorbehandlung erfolgt insbesondere durch Plasmabehandlung und/oder Bestrahlung.

Nach der Vorbehandlung kann das weitere bzw. zweite Material vorzugsweise durch sogenannte "Bi-Injection" (also in der Spritzform, in der zuvor das erste Material gegossen bzw. gespritzt wurde) direkt gegen das vorbehandelte bzw. erste Material gespritzt und dadurch mit diesem fest verbunden werden, unter fester Verbindung bzw. Verbindung ist bei der vorliegenden Erfindung vorzugsweise eine chemische und/oder Verbindung zu verstehen.

Vorzugsweise erfolgt die Vorbehandlung nur bereichsweise bzw. nur in einem gewünschten Bereich. Dieser Bereich kann durch eine Maske, Blende o. dgl. bei der Vorbehandlung sehr einfach und kostengünstig festgelegt werden. Eine Verbindung bzw. Haftung der beiden Materialien, insbesondere des zweiten Materials auf dem ersten Material, erfolgt dann insbesondere nur in dem vorbehandelten Bereich. So ist es beispielsweise möglich, das zweite Material gegen das erste Material vollflächig zu spritzen, aber letztendlich nur in dem vorbehandelten Teilbereich eine Verbindung mit dem ersten Material zu erreichen. In dem anderen Bereich kann sich das zweite Material bzw. das davon gebildete Bauteil o. dgl. - je nach Bedarf, Konstruktion o dgl. - wieder lösen und beispielsweise eine mit der Flüssigkeit in Kontakt stehende Kammer, einen Pumpenraum oder besonders bevorzugt ein Ventil oder einen Auslaßkanal, der sich beispielsweise wieder schließt, o. dgl. bilden.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1: einen schematischen Schnitt einer vorschtagsgemäßen Abgabevorrichtung gemäß einer ersten Ausführungsform;
- Fig. 2: einen schematischen Schnitt einer vorschlagsgemäßen Abgabevorrichtung gemäß einer zweiten Ausführungsform;
- Fig. 3: einen schematischen Schnitt einer vorschlagsgemäßen Abgabevorrichtung gemäß einer dritten Ausführungsform;
- Fig. 4: eine perspektivische Ansicht der Abgabevorrichtung gemäß Fig. 3;
- Fig. 5: einen schematischen Schnitt einer vorschlagsgemäßen Abgabevorrichtung gemäß einer vierten Ausführungsform;
- Fig. 6: eine ausschnittsweise Vergrößerung von Fig. 5;
- Fig. 7: einen schematischen Schnitt einer vorschlagsgemäßen Abgabevorrichtung gemäß einer fünften Ausführungsform;
- Fig. 8: eine perspektivische Ansicht der Abgabevorrichtung, gemäß Fig. 7;
- Fig. 9: einen schematischen Schnitt einer vorschlagsgemäßen Abgabevorrichtung gemäß einer sechsten Ausführungsform;
- Fig. 10: eine perspektivische Ansicht der Abgabevorrichtung gemäß Fig. 9, jedoch ohne Betätigungselement bzw. Abdeckung; und
- Fig. 11: einen schematischen Schnitt des Betätigungselements.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

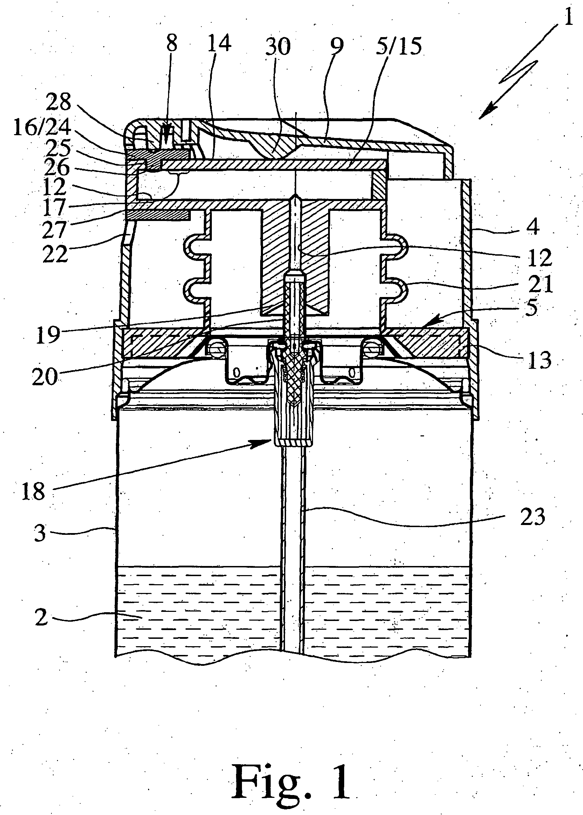

Fig. 1 zeigt in einem schematischen Schnitt eine erste Ausführungsform der vorschlagsgemäßen Abgabevorrichtung 1, die vorzugsweise als Abgabekopf zur Abgabe einer Flüssigkeit 2 im eingangs genannten Sinn ausgebildet ist.

Die Flüssigkeit 2 kann wesentlich höher viskos sein als Wasser oder ggf. sogar pastös. Insbesondere kann sie einen Schaum oder Gel bilden. Die Flüssigkeit 2 kann auch Gas in flüssiger und/oder sonstiger Form enthalten.

Insbesondere ist die Abgabevorrichtung 1 zur nicht-sprühenden Abgabe der Flüssigkeit 2 ausgebildet. Insbesondere erfolgt eine Ausgabe der Flüssigkeit 2 als Schaum, vorzugsweise als Rasierschaum o. dgl. Die Flüssigkeit 2 ist hierzu insbesondere selbstaufschäumend ausgebildet und/öder wird bei der Abgabe aufgeschäumt.

Jedoch kann die Flüssigkeit 2 grundsätzlich auch im nicht-aufgeschäumten Zustand abgegeben werden und insbesondere auch nicht-aufschäumend ausgebildet sein. Weiter ist es auch möglich, daß die Flüssigkeit 2 nur ganz gering aufschäumt, so daß das Aufschäumen beispielsweise lediglich das Volumen etwas vergrößert, aber im wesentlichen eine flüssige oder pastöse Konsistenz bei der Abgabe beibehalten wird.

Es ist anzumerken, daß an Stelle der beispielhaft erläuterten Abgabe der Flüssigkeit 2 als Schaum grundsätzlich auch jede sonstige Abgabe der Flüssigkeit 2 - ggf. auch als pastöse Masse, als Gel, als Tropfen, als Strahl oder als Sprühnebel - in Frage kommt.

Die Abgabevorrichtung 1 ist vorzugsweise mit einem Reservoir, insbesondere einem Behälter 3, für die auszugebende Flüssigkeit 2 versehen oder verbunden. Das Reservoir kann also einen Teil der Abgabevorrichtung 1 bilden oder kann an diese angeschlossen sein.

Beim Darstellungsbeispiel ist das Reservoir als vorzugsweise starrer Behälter 3, insbesondere als Druckbehälter ausgebildet. Der Behälter 3 ist insbesondere länglich und/oder zylindrisch und/oder starr - besonders bevorzugt als metallische Dose - für die Flüssigkeit 2 ausgebildet.

Die Flüssigkeit 2 im Reservoir ist entweder unter Druck setzbar oder steht unter Druck. Insbesondere enthält der Behälter 3 oder die Flüssigkeit 2 ein geeignetes Treibmittel, vorzugsweise ein flüchtiges und/oder brennbares Treibmittel, komprimiertes Gas und/oder Kohlendioxid.

Der Behälter 3 weist besonders bevorzugt stirnseitig ein Abgabeventil 18 auf, an das die Abgabevorrichtung 1 bzw. der davon gebildete Abgabekopf angeschlossen oder anschließbar ist.

Die Abgabevorrichtung 1 weist einen Abgabekanal 12 mit einem zugeordneten Auslaßventil 8 auf. Besonders bevorzugt ist das Auslaßventil 8 am Abgabeende 27 des Abgabekanals 12 bzw. der Abgabevorrichtung 1 angeordnet.

Beim Darstellungsbeispiel weist die Abgabevorrichtung 1 vorzugsweise ein Gehäuseteil 4 auf, das mit dem Reservoir bzw. Behälter 3 verbunden oder verbundbar, besonders bevorzugt klemmend und/oder rastend darauf aufsetzbar ist.

Die Abgabevorrichtung 1 weist weiter ein vorzugsweise in das Gehäuseteil 4 eingesetztes und/oder davon gehaltenes Bauteil 5 auf, das den Abgabekanal 12 bildet und an das Abgabeventil 18 anschließbar ist. Beim Darstellungsbeispiel ist das Bauteil 5 mit einem Anschlußabschnitt 19 zur insbesondere steckbaren Verbindung mit dem Abgabeventil 18 bzw. einem Stutzen 20 des Abgabeventils 18 versehen.

Beim Darstellungsbeispiel sind die beiden Teile 4, 5 als separate Teile ausgebildet. Insbesondere ist das Bauteil 5 in das Gehäuseteil 4 eingesteckt, eingerastet oder in sonstiger geeigneter Weise - insbesondere über ein Verbindungsteil 13 - damit verbunden. Jedoch können die beiden Bauteile 4, 5 auch beispielsweise einstückig ausgebildet sein.

Besonders bevorzugt schließt sich keine Düse, kein weiterer Kanal o. dgl. an das Auslaßventil 8 bzw. dessen Ventilelement 24 bzw. ein Abgabeende 27 bzw. den Abgabekanal 12 an. Vielmehr öffnen sich diese vorzugsweise "ins Freie". So kann die Flüssigkeit 2 nach Austritt aus dem Abgabekanal 12 bzw. Auslaßventil 8 von einem nicht dargestellten Benutzer vorzugsweise unmittelbar aufgenommen bzw. benutzt werden.

Das Auslaßventil 8 ist vorzugsweise derart ausgebildet, daß es in Abhängigkeit vom anstehenden Flüssigkeitsdruck, insbesondere bei Überschreiten eines vorbestimmten Mindestdrucks, öffnet. Besonders bevorzugt ist dieser Mindestdruck höher als ein Aufschäumdruck der vorzugsweise selbstaufschäumenden Flüssigkeit 2. Hingegen ist dann der Abgabedruck (bei geöffneten Abgabeventil 18) und damit der anstehende Flüssigkeitsdruck wiederum höher als der Mindestdruck, so daß zur gewünschten Flüssigkeitsabgabe und Erzeugung bzw. Ausgabe von Schaum das Auslaßventil 8 auch öffnet.

Die Abgabevorrichtung 1 weist ferner ein Betätigungselement 9 auf, das beim Darstellungsbeispiel vom Gehäuseteil 4 gebildet bzw. daran angeformt ist, aber auch als separates Teil ausgeführt sein kann. Jedoch sind auch andere konstruktive Lösungen möglich.

Das Öffnen des Abgabeventils 18 erfolgt vorzugsweise durch Niederdrücken und/oder Kippen der Abgabevorrichtung 1 bzw. des Bauteils 5 bzw. des Betätigungselements 9. Beispielsweise kann das Betätigungselement 9 hierzu über einen Betätigungsabschnitt 30 auf das Bauteil 5 einwirken.

Das Bauteil 5 weist beispielsweise einen federnd nachgiebigen Bereich bzw. Abschnitt 21 auf, so daß das Bauteil 5 mit seinem Anschlußabschnitt 19 zum Abgabeventil 18 hin verlagerbar und dadurch das Abgabeventil 18 öffenbar ist.

Der federnde Abschnitt 21 ist beim Darstellungsbeispiel gemäß Fig. 1 besonders bevorzugt balgartig ausgebildet und/oder ist vorzugsweise nur in einer translätorischen Richtung, insbesondere der Betätigungsrichtung des Abgabeventils 18, federelastisch. Jedoch sind auch andere konstruktive Lösungen möglich, beispielsweise kann der Abgabekanal 12 bzw. das Bauteil 5 zum Öffnen des Abgabeventils 18 alternativ oder zusätzlich auch kippbar oder drehbar sein.

Beim Darstellungsbeispiel erfolgt die Rückstellung des Bauteils 5 vorzugsweise ausschließlich durch die Federkräfte des federnden Abschnitts 21. Zusätzlich oder alternativ kann jedoch beispielsweise auch eine nicht dargestellt Rückstelloder Schließfeder oder eine sonstige konstruktive Lösung eingesetzt werden.

Beim Darstellungsbeispiel ist das Betätigungselement 9 vorzugsweise schwenkbar bzw. kippbar, um das Abgabeventil 18 über das vorzugsweise hier nur translatorisch bewegbare Bauteil 5 bzw. ein Niederdrücken des Anschlußabschnitts 19 zu öffnen.

Mit dein Bauteil 5 sind vorzugsweise auch der Abgabekanal 12, der Anschlußabschnitt 19 und/oder das Auslaßventil 8 verlagerbar, insbesondere niederdrückbar. Beim Darstellungsbeispiel weist das Gehäuseteil 4 eine entsprechende Durchbrechung 22 der Außenwandung auf, um die genannte, vorzugsweise ebenfalls translatorische Bewegung des Abgabeendes 27 zu ermöglichen. Jedoch sind hier auch andere konstruktive Lösungen möglich.

Bei geöffnetem Abgabeventil 18 kann die im Reservoir bzw. Behälter 3 vorzugsweise unter Druck stehende Flüssigkeit 2 über eine Steigleitung 23 und das geöffnete Abgabeventil 18 in den Abgabekanal 12 strömen. Insbesondere erfolgt dann im Abgabekanal 12 ein zumindest erstes Aufschäumen der Flüssigkeit 2. Bedarfsweise kann hierzu auch eine nicht dargestellte Schaumbildungseinrichtung (zusätzlich oder alternativ) vorgesehen sein. Beispielsweise kann die Flüssigkeit 2 bzw. der Schaum durch ein nicht dargestelltes Gitter geführt und/oder durch Zuführung von Gas bzw. Luft (zusätzlich oder alternativ) aufgeschäumt werden.

Aufgrund des bei geöffnetem Abgabeventil 18 im Abgabekanal 12 herrschenden bzw. anstehenden Flüssigkeitsdrucks bzw. Abgabedrucks öffnet das Auslaßventil 8 vorzugsweise selbsttätig.

Die Flüssigkeit 2 kann dann durch das geöffnete Auslaßventil 8 nach außen bzw. ins Freie entweichen und besonders bevorzugt aufschäumen bzw. weiter aufschäumen oder ein Gel oder ein sonstiges Produkt bilden oder in flüssiger, pastöser oder sonstiger Form ausgegeben werden.

Das Abgabeventil 18 schließt bei Loslassen vorzugsweise wieder selbsttätig. Jedoch kann es sich bei dem Abgabeventil 18 beispielsweise auch um ein Dosierventil oder eine sonstige Ventileinrichtung handeln.

Die Flüssigkeitsabgabe bzw. Schaumerzeugung endet, wenn der im Abgabekanal 12 herrschende Flüssigkeitsdruck bzw. Abgabedruck wieder unter den Mindestdruck fällt, so daß das Auslaßventil 8 schließt. Dies ist dann der Fall, wenn das Abgabeventil 18 - insbesondere durch Loslassen bzw. automatische Rückstellung des Abgabekopfs bzw. Betätigungselements 9 - wieder schließt. Das geschlossene bzw. sich schließende Auslaßventil 8 verhindert dann, daß noch im Abgabekanal 12 befindliche Flüssigkeit 2 bzw. befindlicher Schaum der dgl. in unerwünschter Weise nachträglich austreten bzw. herausschäumen kann.

Das Auslaßventil 8 weist vorzugsweise ein Bauteil 24 auf, das vorzugsweise zumindest teilweise bzw. bereichsweise beweglich ausgebildet ist und/oder insbesondere ein Ventilelement bildet. Insbesondere kann das Ventilelement 24 eine Auslaßöffnung 25 des Abgabekänals 12 verschließen.

Die Auslaßöffnung 25 endet vorzugsweise in einer Oberfläche bzw. Wandung 14 des Bauteils 5 bzw. Abgabekanals 12, die vom Ventilelement 24 zumindest im Bereich der Auslaßöffnung 25 abgedeckt bzw. abdeckbar ist.

Beim Darstellungsbeispiel ist die Oberfläche bzw. Wandung 14 vorzugsweise gewölbt bzw. gekrümmt bzw. konvex ausgebildet. Besonders bevorzugt handelt es sich um eine ringförmige Oberfläche. Das Bauteil 5 bzw. der Abgabekanal 12 ist zumindest im Bereich der Auslaßöffnung 25 dementsprechend vorzugsweise hohlzylindrisch bzw. zylindrisch oder ringförmig ausgebildet.

Das Ventilelement 24 ist vorzugsweise an die Krümmung der Oberfläche angepaßt und umgibt den Abgabekanal 12 bzw. das Bauteil 5 bzw. die Oberfläche im Bereich der Auslaßöffnung 25 vorzugsweise teilweise und insbesondere vollständig, beim Darstellungsbeispiel ringförmig. Jedoch sind hier auch andere Konstruktionen möglich.

Das Bauteil 5 ist hier aus einem ersten Material 15, insbesondere einem relativ starren Kunststoffmaterial hergestellt.

Das Bauteil 5 ist vorzugsweise spritzgegossen. Das erste Material 15 ist vorzugsweise ein Kunststoff, insbesondere ein Elastomer und/oder Thermoplast. Jedoch kann es sich grundsätzlich auch um ein sonstiges Material handeln. Dies gilt insbesondere, wenn das Bauteil 5 nicht (nur) die Wandung 14 sondern eine andere Komponente der Abgabevorrichtung 1 bildet.

Das erste Material 15 ist vorzugsweise ein Thermoplast, Elastomer, Gummi oder sonstiger Kunststoff. Bevorzugt wird TPE (thermoplastisches Elastomer), TPV, TEEE (thermoplastische Elastomere mit Ether- und Ester-Gruppen), besonders bevorzugt wird auch TPU (thermoplastisches Urethan) eingesetzt.

Vorschlagsgemäß ist das Bauteil 5 insbesondere bereichsweise, nämlich im Bereich der Wandung 14, mit dem Ventilelement 24 oder einem sonstigen Bauteil bzw. zweiten Material 16 versehen bzw. abgedeckt.

Vorzugsweise handelt es sich bei dem zweiten Material 16 ebenfalls um ein Elastomer und/oder einen Thermoplasten, bedarfsweise aber auch um ein sonstiges Material. Besonders bevorzugt handelt es sich bei dem zweiten Material 16 um einen lebensmittelechten und/oder gegenüber der Flüssigkeit 2 unempfindlichen bzw. beständigen Kunststoff, wie ein Polyolefin, insbesondere PP (Polypropylen) oder PE (Polyethylen), besonders bevorzugt UPE, TPEE, TEEE, oder aber auch um TPU.

Das erste Material 15 und das zweite Material 16 sind vorzugsweise verschieden, weisen also zumindest unterschiedliche Eigenschaften und/oder zumindest unterschiedliche Zusammensetzungen auf. Durch die Kombination verschiedener Materialien lassen sich wesentlich einfacher die gewünschten Eigenschaften des Bauteils 5, beispielsweise im Bereich der Wandung 14 bzw. in dem für das Pumpen elastisch verformbaren Bereich, erreichen.

Das zweite Material 16 bzw. die Schicht ist vorzugsweise fest, unlösbar und/oder vollflächig mit dem ersten Material 15 verbunden. Hierzu ist das zweite Material 16 insbesondere durch die sogenannte "Bi-Injection" an das erste Material 15 angespritzt, wobei das erste Material teilweise eine zumindest im wesentlichen glatte oder rauhe Oberfläche oder eine mit Hinterschneidungen, Ausnehmungen, Durchbrechungen oder dergleichen versehene Oberfläche aufweisen bzw. bilden kann.

Das erste Material 15 bzw. dessen Oberfläche ist vor dem Anspritzen des zweiten Materials 16 vorzugsweise zumindest bereichsweise vorbehandelt. Insbesondere erfolgt eine Vorbehandlung durch Plasmabehandlung und/oder Bestrahlung. Durch die Vorbehandlung können Radikale gebildet und/oder Polymerketten aufgebrochen werden und/oder eine bessere oder überhaupt eine Bindung zwischen dem ersten Material 15 und dem zweiten Material 16 ermöglicht werden.

Wenn das zweite Material 16 an, gegen oder auf das erste Material 15 mit vorbehandelter Oberfläche gespritzt wird, kann sich das zweite Material 16 mit dem ersten Material 15 insbesondere chemisch und/oder fest und/oder dicht und/oder unlösbar - insbesondere nur in dem vorbehandelten Bereich 17 - verbinden.

Bei der "Bi-Injection" erfolgt das Spritzen des zweiten Materials 16 insbesondere in der gleichen Spritzform, in der das Bauteil 5 bzw. die Wandung 14 hergestellt wird. Insbesondere ist ein Entnehmen des Bauteils 5 nicht erforderlich. Dies gestattet eine besonders einfache Herstellung.

Alternativ oder zusätzlich kann das zweite Material 16 grundsätzlich auch durch Kleben, Schweißen oder in sonstiger geeigneter Weise, insbesondere durch eine form- und/oder kraftschlüssige Verbindung, beispielsweise durch Klemmen, mit dem Bauteil 5 bzw. der Wandung 14 verbunden sein.

Alternativ kann das zweite Material 16 bzw. die Materialschicht auch nur bereichsweise mit dem ersten Material 15 verbunden oder zusammen mit diesem - beispielsweise in Rand- oder Umfangsbereichen - gehalten sein.

Alternativ oder zusätzlich zu der bevorzugten chemischen Verbindung der beiden Materialien 15, 16 durch Vorbehandlung und anschließendes Anspritzen insbesondere nach vorheriger Vorbehandlung - auch eine mechanische, insbesondere kraft- oder formflüssige Verbindung möglich.

Das Ventilelement 24 ist aus dem zweiten Material 16 hergestellt, das vorzugsweise elastisch verformbar und insbesondere weicher als das erste Material 15 ist.

Das Ventilelement 24 ist vorzugsweise spritzgegossen, insbesondere durch "BiInjection" direkt auf bzw. gegen das Bauteil 5 gespritzt. Dies gestattet eine sehr einfache Herstellung.

Das Ventilelement 24 kann mit einem Vorsprung 26 in die Auslaßöffnung 25 hineinragen, wie beim Darstellungsbeispiel gezeigt. Der Vorsprung 26 ist insbesondere bei dem bevorzugten Anspritzen des Bauteils 24 sehr einfach herstellbar bzw. anformbar.

Bei entsprechendem Flüssigkeitsdruck öffnet das Auslaßventil 8 dadurch, daß sich das Ventilelement 24 zumindest teilweise von dem Bauteil 5 abhebt bzw. radial weitet oder dehnt. Entsprechend kann dann insbesondere auch der optionale Vorsprung 26 zumindest etwas aus der Auslaßöffnung 24 radial nach außen verlagert werden, um so einen Austritt der Flüssigkeit 2 aus dem Abgabekanal 12 durch die Auslaßöffnung 25 hindurch und dann axial nach vorne zum freien Ende des Bauteils 5 bzw. Abgabeende 27 hin zu ermöglichen.

Besonders bevorzugt ist das Ventilelement 24 zumindest bereichsweise fest und/oder dicht mit der Oberfläche des Bauteils 5 bzw. dem ersten Material 15 verbunden. Die Verbindung wird insbesondere durch eine Vorbehandlung der Oberfläche bzw. Wandung 14 in dem Bereich 17, in dem eine feste Verbindung gewünscht wird, vor dem Anspritzen des zweiten Materials 16 ermöglicht. Besonders bevorzugt erfolgt die Vorbehandlung durch Plasmabehandlung und/oder Bestrahlung. So können die beiden Materialien 15 rund 16, wie PE oder PP einerseits TPU andererseits, die sonst durch Anspritzen nicht miteinander fest verbindbar sind, in dem gewünschten Bereich durch das anschließende Anspritzen des zweiten Materials 16 fest, insbesondere chemisch und/oder dicht, miteinander verbunden werden.

Wie bereits erwähnt, liegt ein Aspekt darin, daß zur Verbesserung der Verbindbarkeit von zwei Materialien, insbesondere Kunststoffen, ein Material bzw. dessen Oberfläche durch Plasmabehandlung und/oder durch Bestrahlung, beispielsweise mittels Elektronen, Positronen, Mikrowellen, UV-Strahlung, Röntgenstrahlung, Laserlicht o. dgl., vorbehandelt wird, um eine besonders gute oder überhaupt eine Haftung des anderen Materials auf dem ersten, vorbehandelten Material zu ermöglichen. Besonders bevorzugt ist dann kein sonstiger Haftvermittler o. dgl. erforderlich. Insbesondere können so auch Materialien, die normalerweise nicht miteinander verbindbar sind, wie TPU einerseits und PE oder PP andererseits, miteinander verbunden werden. Insbesondere wird dadurch ermöglicht, das weitere Material direkt gegen das vorbehandelte Material zu spritzen, insbesondere durch die bereits genannte "Bi-Injection" o. dgl., um unmittelbar einen festen Verbund aus den beiden Materialien zu erreichen

Die vorgenannte Vorbehandlung kann insbesondere auch bei jeder Ausführungsform zur Herstellung einer guten bzw. festen bzw. ausschließlichen Verbindung zwischen dem Materialien 15, 16 bzw. Bauteil 5, 24.

Gemäß einer besonders bevorzugten Variante erfolgt die Vorbehandlung nur in einem begrenzten Bereich 17. Beispielsweise kann der Bereich 17 durch eine Blende, Maske o. dgl. festgelegt werden, so daß nur in dem gewünschten Bereich 17 die gewünschte Plasmabehandlung, Bestrahlung o. dgl. zur Vorbehandlung erfolgt.

Insbesondere ist es möglich und vorgesehen, das zweite Material 16 ummittelbar und vollflächig gegen das erste Material 15 bzw. die davon gebildete Oberfläche oder Wandung 14 zu spritzen oder in sonstiger Weise aufzubringen. Aufgrund der nur bereichsweisen Vorbehandlung erfolgt dann vorzugsweise eine Haftung bzw. Verbindung nur in dem vorbehandelten Bereich 17. Das weitere Bauteil bzw. Ventilelement 24 kann sich also dann wieder von dem ersten Material 15 in dem nicht vorbehandelten Bereich 17 lösen, beispielsweise abgehoben werden o. dgl., insbesondere um einen Kanal für die Flüssigkeit 2 oder ein daraus gebildetes Produkt, wie einen Schaum, oder ein Ventil, einen Auslaßkanal o. dgl. zu bilden. So wird eine sehr einfache Herstellung und auf einfache Weise die Festlegung gewünschter Verbindungsbereiche 17 ermöglicht.

Gemäß einer bevorzugten Ausführungsvariante ist der Verbindungsbereich 17, in dem die genannte Vorbehandlung bzw. feste Verbindung des Ventilelements 24 mit dem Bauteil 5 erfolgt, vorzugsweise ringförmig ausgebildet und/oder nur auf der einem Abgabeende 27 gegenüberliegenden Seite der Auslaßöffnung 25 angeordnet.

Es ist grundsätzlich anzumerken, daß der Begriff "feste" Verbindung bei der vorliegenden Erfindung vorzugsweise im Sinne einer chemischen und/oder dichten Verbindung zu verstehen ist.

Es hat sich überraschend gezeigt und ein Aspekt der vorliegenden Erfindung liegt darin, daß quasi ein "virtueller" Auslaßkanal zwischen den beiden flächig aufeinanderliegenden Materialien 15, 16 bzw. flächig aufeinanderliegenden Bauteilen 5, 24 gebildet wird, der nur bei entsprechenden Flüssigkeitsdruck öffnet und selbsttätig wieder schließt und insbesondere eine Ventilfunktion realisiert und/oder das unerwünschte Nachströmen bzw. Nachschäumen sehr effektiv verhindern kann.

Gemäß einer nicht dargestellten Ausführungsvariante kann der Verbindungsbereich 17 sich auch seitlich neben der Auslaßöffnung 25 bzw. axial zum Abgabeende 27 hin erstrecken, insbesondere die Auslaßöffnung 25 U-förmig umgeben, wobei das offene Ende dann am Abgabeende 27 endet. So kann der "virtuelle" Auslaßkanal insbesondere bedarfsweise längsseitig begrenzt oder - anders ausgedrückt - ein besonders definiertes Abgabeverhalten in einem entsprechend begrenzten Umfangsbereich oder Oberflächenbereich zwischen dem Bauteil 5 und Ventilelement 24 sichergestellt werden.

Gemäß einem weiteren Aspekt wird das Auslaßventil 8 bzw. dessen Ventilelement 24 bei unbetätigter Abgabevorrichtung 1 bzw. geschlossenem Abgabeventil 18 durch einen Anschlag 28 in die geschlossene Stellung - hier insbesondere gegen die Auslaßöffnung 25 - (zusätzlich) gedrückt bzw. vorgespannt. Beim Darstellungsbeispiel ist der Anschlag 28 vorzugsweise gehäuseseitig bzw. am Gehäuseteil 4 angeordnet, insbesondere angeformt, und/oder feststehend bzw. stationär ausgebildet.

Im dargestellten, geschlossenen Zustand befindet sich das Bauteil 5 bzw. der Abgabekanal 12 in der oberen Position, so daß der Anschlag 28 unmittelbar und/oder auf der der Auslaßöffnung 25 gegenüberliegenden Seite auf das Ventilelement 24 drückt und dadurch das Auslaßventil 8 (zusätzlich) geschlossen hält.

Ein besonderer Vorteil des Auslaßventils 8 liegt darin, daß neben der Vermeidung eines nachträglichen Austritts der Flüssigkeit 2, insbesondere eines Nachschäumens, auch für den Benutzer eine sehr einfache Reinigung ermöglicht wird, da das Auslaßventil 8 vorzugsweise ein sauberes bzw. leicht zu reinigendes Abgabeende 27 bildet.

Beim Darstellungsbeispiel erfolgt die Flüssigkeitsausgabe vorzugsweise im wesentlichen quer, insbesondere senkrecht, zur Niederdrückrichtung bzw. Öffnungsrichtung des Abgabeventils 18 und/oder zumindest im wesentlichen horizontal oder quer zur Längsrichtung des Behälters 3.

Vorzugsweise erstreckt sich das Ventilelement 24 bis zum Abgabeende 27 und/oder bildet dieses, insbesondere zusammen mit dem Bauteil 5 bzw. der Wandung 14.

Weiter ist zu erwähnen, daß sich an das Abgabeende 27 vorzugsweise keine weitere, die Flüssigkeitsabgabe formende Einrichtung, wie eine Düse, ein Kanal oder dgl., anschließt. Dies schließt jedoch nicht aus, daß beispielsweise eine schalenartige Erweiterung, gehäuseseitige Vertiefung oder dgl., in die das Abgabeende 27 mündet, vorgesehen sein kann.

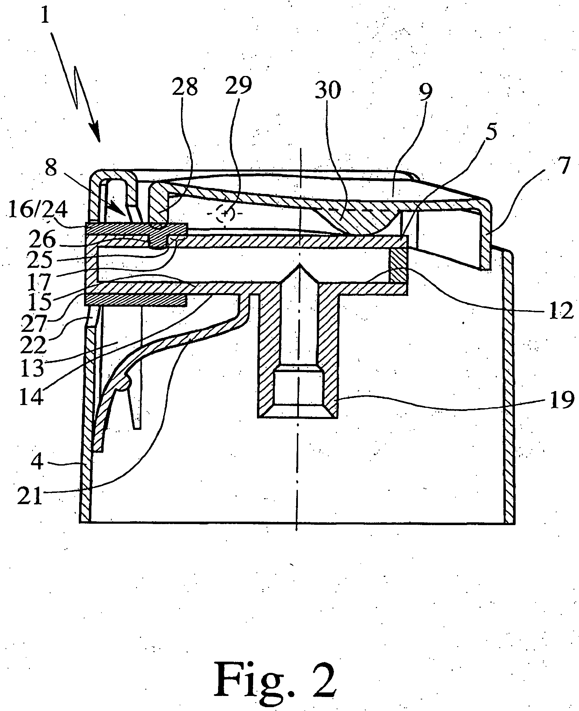

Fig. 2 zeigt eine zweite Ausführungsform der vorschlagsgemäßen Abgabevorrichtung 1, wobei aus Vereinfachungsgründen der zugeordnete Behälter 3 mit dem Abgabeventil 18 nicht dargestellt ist.

Die zweite Ausführungsform ist der ersten Ausführungsform sehr ähnlich, so daß nachfolgend nur wesentliche Unterschiede erläutert werden. Insbesondere gelten die bisherigen Ausführungen und Erläuterungen für diese und die weiteren Ausführungsformen ergänzend bzw. entsprechend.

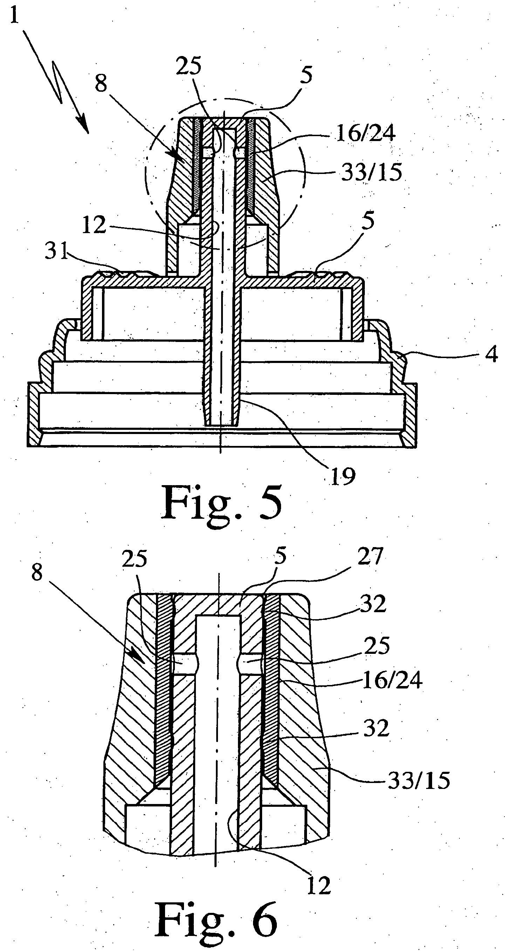

Das Bauteil 5 mit dem Abgabekanal 12 ist bei der zweiten Ausführungsform zur Betätigung bzw. zum Öffnen des in Fig. 5 nicht dargestellten Abgabeventils 18 aus der gezeigten Ausgangsstellung kippbar bzw. schwenkbar. Insbesondere ist hier der Abschnitt 21 nicht wie bei der ersten Ausführungsform balgartig ausgebildet, sondern beispielsweise in der Art eines Arms, der beispielsweise seitlich zum Gehäuseteil 4 geführt ist.

Beim Niederdrücken bzw. Verkippen kann sich das Bauteil 5 vorzugsweise zusammen mit dem Betätigungselement 9 mit einem Ende bzw. Rand 7 in das Gehäuseteil 4 hinein bzw. zum Abgabeventil 18 hin bewegen, um dieses zu öffnen.

Bei der zweiten Ausführungsform ist der Anschlag 28 nicht stationär, sondern beweglich ausgebildet. Der Anschlag 28 ist am Betätigungselement 9 angebracht.

Das Betätigungselement 9 ist um eine vorzugsweise horizontal bzw. bei der Darstellung gemäß Fig. 2 quer zur Zeichenebene verlaufene Schwenkachse 29 verschwenkbar bzw. verkippbar. Die Schwenkachse 29 liegt vorzugsweise in einer Ebene zwischen dem Anschlag 28 einerseits und dem auf das Bauteil 5 einwirkenden Betätigungsabschnitt 30 andererseits. Dementsprechend wird bei Betätigen bzw. Niederdrücken des Betätigungselements 9 aus der in Fig. 2 gezeigten Stellung der Betätigungsabschnitt 30 nach unten und der Anschlag 28 nach oben bzw. entgegengesetzt bewegt. Dementsprechend kann das Auslaßventil 8 ungehindert öffnen, auch wenn das Bauteil 5 bzw. das Auslaßventil 8 bei betätigter Abgabevorrichtung 1 nicht oder nur relativ wenig nach unten bzw. vom Anschlag 28 weg bewegt wird.

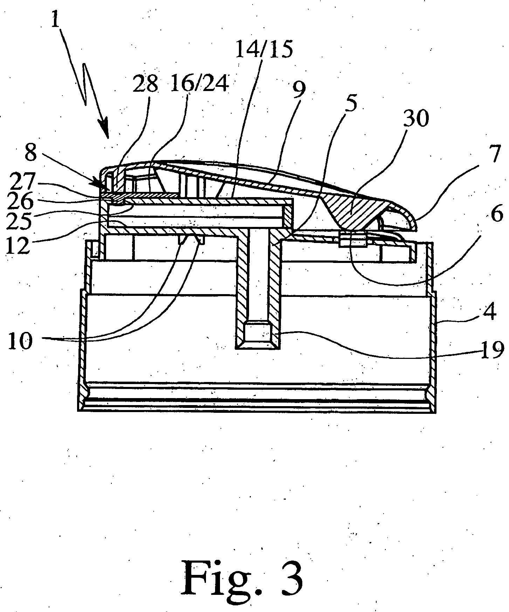

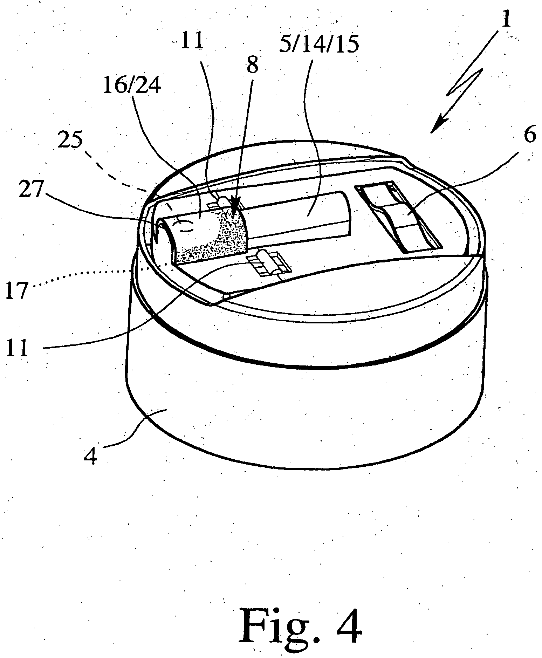

Fig. 3 zeigt in einem schematischen Schnitt eine dritte Ausführungsform, die der zweite Ausführungsform sehr ähnlich ist. Fig. 4 zeigt eine perspektivische Ansicht der Abgabevorrichtung 1 gemäß der dritten Ausführungsform.

Der Anschlag 28 ist hier zumindest weitgehend stationär angeordnet bzw. zumindest im wesentlichen unbeweglich ausgebildet.

Bei der dritten Ausführungsform ist das Bauteil bzw. Ventilelement 24 vorzugsweise nicht ringförmig bzw. hohlzylindrisch, sondern nur gewölbt bzw. im wesentlichen halbzylindrisch ausgebildet. Das Bauteil 24 ist vorzugsweise zumindest im Bereich seiner Längskanten fest mit dem Bauteil 5, der Wandung 14 und/oder ersten Material 15 verbunden, vorzugsweise durch eine entsprechende Verbindung nach entsprechender Vorbehandlung und/oder auf sonstige geeignete Weise. Alternativ oder zusätzlich erstreckt sich der Verbindungsbereich 17 vorzugsweise halbringförmig auf der dem Abgabeende 27 abgewandten Seite der Auslaßöffnung 25 über die Wandung 14.

Die Verbindung des Bauteils 5 und Ventilelements 24 in dem gewünschten Bereich 17 (in Fig. 4 gepunktet angedeutet) erfolgt vorzugsweise wiederum durch entsprechende, insbesondere nur bereichsweise Vorbehandlung des ersten Materials 15 und anschließendes Anspritzen des zweiten Materials 16, so daß in dem vorbehandelten Bereich 17 eine entsprechend feste Verbindung zwischen den beiden Materialien 15, 16 erzeugt wird, wie bereits angesprochen.

Jedoch ist es grundsätzlich auch möglich, das Ventilelement 24 in jeder sonstigen geeigneten Art und Weise in den gewünschten Bereichen mit der darunterliegenden Oberfläche bzw. Wandung 14 bzw. dem Bauteil 5 zu verbinden.

Bei der dritten Ausführungsform sind das Gehäuseteil 4 und das Bauteil 5 vorzugsweise einstückig miteinander ausgebildet, wobei das Gehäuseteil 4 das Bauteil 5 verschwenkbar hält.

Beim Darstellungsbeispiel ist das Betätigungselement 9 vorzugsweise als separates Teil ausgebildet, das insbesondere aufgesetzt, aufgesteckt, aufgeklemmt oder aufgerastet ist. Insbesondere ist hier das Betätigungselement 9 über vorzugsweise angeformte Lagerabschnitte 10 (Fig. 3) an der Abgabevorrichtung 1 bzw. am Bauteil 5, insbesondere an Halteabschnitten 11 (Fig. 4), schwenkbar gelagert bzw. gehalten. Die hier nicht dargestellte Schwenkachse 29 verläuft insbesondere zumindest im wesentlichen horizontal. Vorzugsweise ist das Betätigungselement 9 mit seinen Lageabschnitten 10 auf beiden Seiten des Auslaßventils 8 bzw. Ventilelements 24 gelagert bzw. abgestützt und/oder auf die Hälteabschnitte 11 aufrastbar bzw. aufgerastet.

Es sind aber auch andere konstruktive Lösungen möglich. Insbesondere kann das Betätigungselement 9 grundsätzlich auch auf sonstige Weise gelagert, elastisch verformbar und/oder an das Gehäuseteil 4 bzw. Bauteil 5 angeformt sein.

Besonders bevorzugt ist der Anschlag 28 bzw. das Betätigungselement 9 in seine Ausgangsstellung bzw. die das Auslaßventil 8 schließende Schließstellung vorgespannt. Beim Darstellungsbeispiel ist hierzu ein Federabschnitt 6 vorgesehen, der insbesondere am Bauteil 5 einstückig angeformt bzw. von diesem gebildet ist. Jedoch sind auch andere konstruktive Lösungen möglich.

Die vom Federabschnitt 6 bzw. einer sonstigen Einrichtung auf das Betätigungselement 9 ausgeübte Rückstellkraft ist vorzugsweise kleiner als die zum Niederdrücken des Bauteils bzw. Anschlußabschnitts 19 und insbesondere die zum Öffnen des Abgabeventils 18 erforderliche Kraft. So kann erreicht werden, daß zunächst der Anschlag 28 vom Ventilelement 24 abgerückt bzw. seine auf das Ventilelement 24 ausgeübte Kraft verringert wird, bevor das Abgabeventil 18 öffnet.

Fig. 5 zeigt in einem schematischen Schnitt eine vierte Ausführungsform der vorschlagsgemäßen Abgabevorrichtung 1. Fig. 6 zeigt eine ausschnittsweise Vergrößerung des Auslaßventils 8.

Bei der vierten Ausführungsform erfolgt vorzugsweise wiederum eine lineare bzw. translatorische Betätigung des zugeordneten (in Fig. 5 und 6 nicht dargestellten) Abgabeventils 18, also ähnlich wie bei der ersten Ausführungsform. Dementsprechend werden nur wesentliche Unterschiede gegenüber der ersten Ausführungsform nachfolgend erläutert.

Bei der vierten Ausführungsform ist das Bauteil 5 vorzugsweise direkt manuell betätigbar. Insbesondere ist hier zumindest ein entsprechender Betätigungsbereich 31 gebildet.

Das Ventilelement 24 ist wiederum vorzugsweise im wesentlichen hohlzylindrisch ausgebildet und insbesondere mit mindestens einem Ringwulst 32 innenseitig versehen, hier jeweils mit einem Ringwulst 32 im Bereich seiner beiden axialen Enden. Die Ringwulste 32 dienen einer besonders definierten, insbesondere ringförmigen und dichtenden Anlage des Ventilelements 24 am Bauteil 5 bzw. dessen Wandung 14. Die Auslaßöffnung 25 bzw. beim Darstellungsbeispiel beiden Auslaßöffnungen 25 endet bzw. enden zwischen den beiden Ringwulsten 32.

Das Ventilelement 24 ist beim Darstellungsbeispiel durch ein vorzugsweise hohlzylindrisches Halteteil 33 gehalten bzw. gesichert. Das Halteteil 33 umgibt das Ventilelement 24 insbesondere peripher und/oder über die gesamte axiale Länge.

Besonders bevorzugt ist das Ventilelement 24 in das Halteteil 33 eingespritzt bzw. gegen das Halteteil 33 gespritzt. Dies erfolgt vorzugsweise wiederum dadurch, daß die Oberfläche des Halteteils 33 - beim Darstellungsbeispiel die hohlzylindrische Innenmantelfläche - vor dem Anspritzen vorbehandelt wird, wie oben bereits erläutert, um eine feste Verbindung mit dem Ventilelement 24 zu erreichen.

Das Halteteil 33 wird dann zusammen mit dem Ventilelement 24 auf das Bauteil 5 bzw. den Abgabekanal 12 axial aufgeschoben. Je nach Anpassung bzw. radiale Vorspannung des Ventilelements 24 gegen das Bauteil 5 bzw. dessen Wandung 14 ist eine weitere Befestigung bzw. Festlegung des Halteteils 30 an der Abgabevorrichtung 1 nicht mehr erforderlich. Jedoch kann das Halteteil 33 auch zusätzlich mit der Abgabevorrichtung 1 in geeigneter Weise verbunden bzw. daran gesichert sein, beispielsweise durch Klemmen oder Rasten.

Zum Öffnen des Auslaßventils 8 kann das Ventilelement 24 insbesondere im Bereich seines Ririgvwlstes 32 zum Abgabeende 27 hin elastisch radial noch außen ausweichen (vorzugsweise ist das Halteteil 33 entsprechend radial ausgenommen), um so die Flüssigkeit 2 bzw. den davon gebildeten Schaum oder dgl. ausgeben zu können.

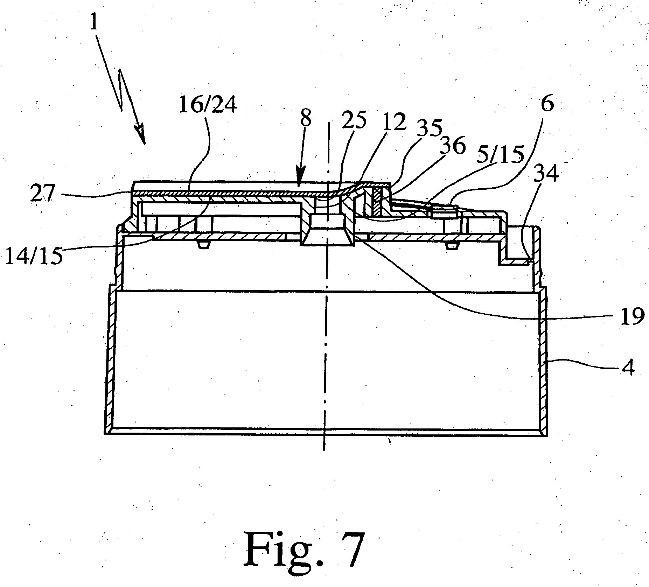

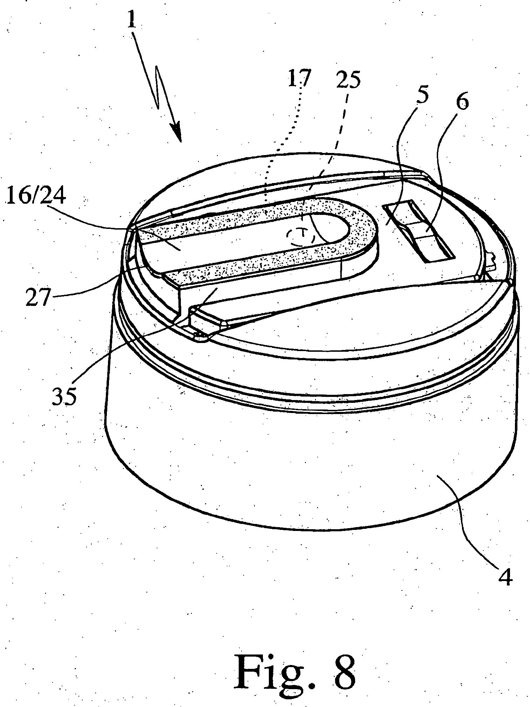

Fig. 7 zeigt eine fünfte Ausführungsform der vorschlagsgemäßen Abgabevorrichtung 1. Fig. 8 zeigt eine perspektivische Ansicht dieser Abgabevorrichtung 1. Das Betätigungselement 9 ist jeweils weggelassen.

Die fünfte Ausführungsform ist der zweiten und dritten Ausführungsform hinsichtlich der Schwenkbarkeit des Bauteils 5 sehr ähnlich. Das Bauteil 5 mit dem Auslaßventil 8 ist um eine in den Fig. 7 und 8 nicht gezeigte Schwenkachse 29 im Bereich des Auslasses bzw. Abgabeendes 27 aus der gezeigten, nicht betätigten Lage nach unten zum Öffnen des zugeordneten, nicht gezeigten Abgabeventils 18 schwenkbar bzw. kippbar. Bei der erstmaligen Betätigung bericht hierbei die in Fig. 7 noch angedeutete, vorzugsweise vorgesehene Sollbruchstelle 34, die insbesondere als schmaler Steg ausgebildet ist und die bevorzugte einstückige Herstellung des Gehäuseteils 4 und Bauteils 5 erleichtert.

Bei der fünften Ausführungsform ist der Abgabekanal 12 axial endseitig offen und/oder nicht abgeknickt. Er bildet an seinem axialen Ende die Auslaßöffnung 25, die unmittelbar von dem Ventilelement 24 abdeckbar bzw. verschließbar ist.

Die Auslaßöffnung 25 endet vorzugsweise in einer nutartigen bzw. konkaven Oberfläche der Wandung 14. Insbesondere öffnet sich die Auslaßöffnung 25 im Bereich des dem Abgabeende 27 entgegengesetzten Endes einer länglichen, von dem Bauteil 5 gebildeten Vertiefung, die insbesondere von einem vorzugsweise U-förmigen, demgegenüber erhöhten Rand 35 umgeben ist. Der Rand 35 verläuft mit seinen beiden vorzugsweise parallelen Schenkeln in Richtung der Ausgaberichtung, also zum Abgabeende 27 hin.

Das Ventilelement 24 ist zumindest im Bereich des Randes 35 mit dem Bauteil 5 fest und dicht gehalten und/oder verbunden, wie durch den Bereich 17 in Fig. 8 schematisch angedeutet. Dies kann durch entsprechendes Umspritzen, Festklemmen, Anspritzen und/oder Eingreifen in einen entsprechenden Schlitz, einer entsprechenden Nut 36, einer Vertiefung oder dgl. - insbesondere im Bereich des Randes 35 - erfolgen, wie in Fig. 7 angedeutet.

Das das Ventilelement 24 bildende zweite Material 16 ist direkt an oder auf bzw. gegen das Bauteil 5 gespritzt, besonders bevorzugt wieder durch "Bi-Injection", wie bereits erläutert.

Zur sicheren festen und dichten Verbindung des Ventilelements 24 mit dem Bauteil 5 bzw. dessen Wandung 14 bzw. dem ersten Material 15 erfolgt vor dem Anspritzen des Ventilelements 24 wiederum vorzugsweise eine Vorbehandlung in dem Bereich 17 (in Fig. 8 gepunktet angedeutet), in dem die feste Verbindung zwischen Ventilelement 24 und Bauteil 5 gewünscht wird. Besonders bevorzugt erfolgt dies im Bereich des Randes 35 und/oder in einem die Auslaßöffnung 25 zumindest im wesentlichen U-förmig umgebenden Bereich.

Wie bei der ersten, zweiten und dritten Ausführungsform liegt gemäß einem bevorzugten Aspekt das Ventilelement 24 vorzugsweise gleichmäßig bzw. vollflächig auf dem Bauteil 5 bzw. dessen Wandung 14 entlang eines "virtuellen" Ausgabekanals ausgehend von der Auslaßöffnung 25 zum Abgabeende 27 hin auf.

Erst bei der Flüssigkeitsabgabe wird das Ventilelement 24 entlang dieses virtuellen Auslaßkanals vom Bauteil 5 bzw. der Wandung 14 elastisch abgehoben (dies ist möglich, da sich das zweite Material 16 mit dem ersten Material 15 des Bauteils 5 ohne die genannte Vorbehandlung nicht fest verbindet und da zumindest in dem Bereich des gewünschten virtuellen Auslaßkanals eben keine Vorbehandlung erfolgt) und dadurch der Auslaßkanal freigegeben bzw. geöffnet.

Nach beendeter Flüssigkeitsabgabe schließt das Auslaßventil 8 bzw. Ventilelement 24 aufgrund der elastischen Rückstellkräfte vorzugsweise wieder selbsttätig.

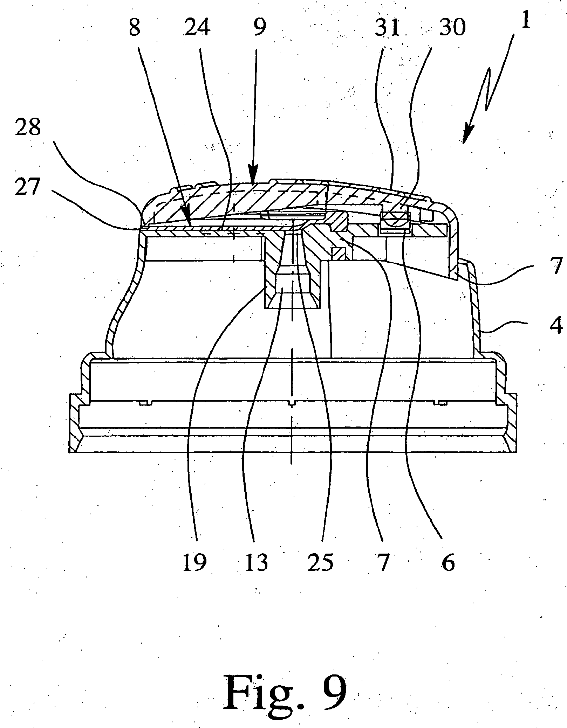

Nachfolgend wird eine sechste Ausführungsform der vorschlagsgemäßen Abgabevorrichtung 1 unter Bezugnahme auf Fig. 9 bis 11 erläutert, wobei die Beschreibung sich auf wesentliche Aspekte fokussiert. Die bisherigen Ausführungen und Erläuterungen gelten daher insbesondere entsprechend oder ergänzend.

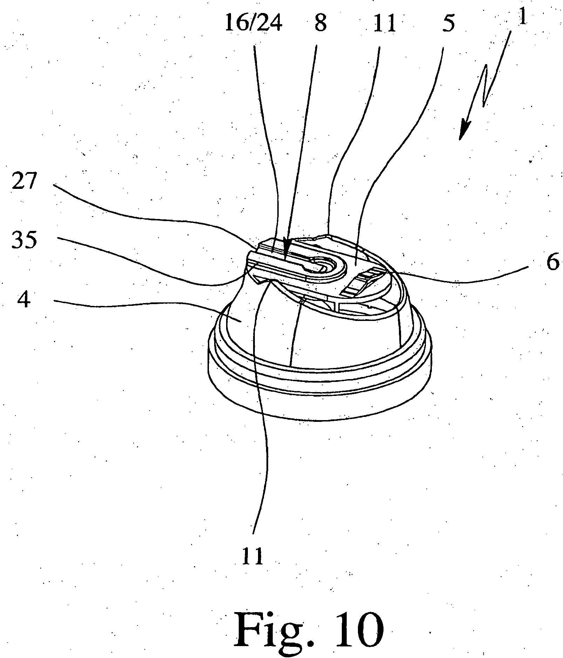

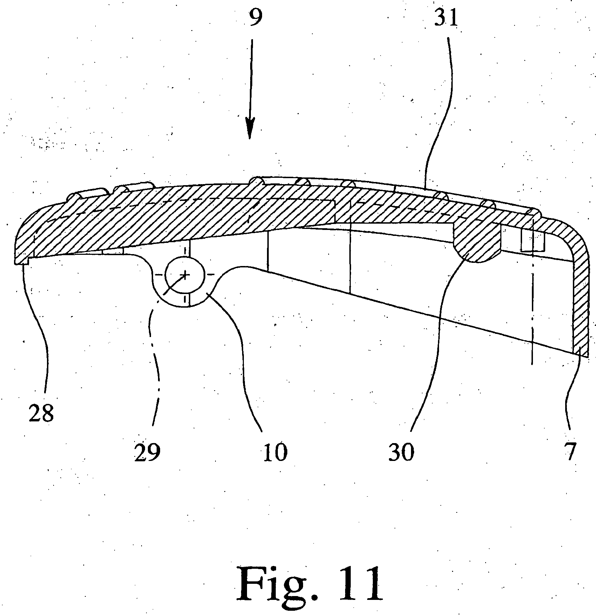

Fig. 9 zeigt die Abgabevorrichtung 1 gemäß der sechsten Ausführungsform in einem schematischen Schnitt, wiederum ohne zugeordneten Behälter 3 und dementsprechend auch ohne zugeordnetes Abgabeventil 18, das vorzugsweise fest am Behälter 3 angeordnet ist. Fig. 10 zeigt in einer perspektivischen Ansicht die Abgabevorrichtung 1 ohne Betätigungselement 9. Fig. 11 zeigt das insbesondere als Abdeckung bzw. kappenartig ausgebildete Betätigungselement 9 in einem schematischen Schnitt.

Der Anschlag 28 wirkt hier insbesondere am Abgabeende 27 bzw. benachbart zu diesem und/oder von oben auf das Ventilelement 24.

Besonders bevorzugt ist der Anschlag 28 nicht unmittelbar gegenüberliegend zu der Auslaßöffnung 25 sondern quer versetzt zu dieser angeordnet.

Besonders bevorzugt sind der Anschlag 28 einerseits und der Abgabekanal 12 bzw. die Auslaßöffnung 25 andererseits beabstandet voneinander und insbesondere an entgegengesetzten Endbereichen des von dem Ventilelement 24 bei geöffnetem Auslaßventil 8 gebildeten "virtuellen Auslaßkanals" angeordnet.

Insbesondere dient der Anschlag 28 einem Verschließen des Auslaßventils 8 in einem Bereich des Ventilelements 24, der derart beabstandet von der Auslaßöffnung 25 ist, daß das Ventilelement 24 unabhängig vom Anschlag 28 die Auslaßöffnung 25 insbesondere aufgrund entsprechender elastischer Rückstellkräfte verschließen kann. Es ergibt sich insbesondere eine Art Doppelventil bzw. eine besonders gute Abdicht- oder Schließwirkung.

Der Anschlag 28 wirkt nicht nur bei der sechsten Ausführungsform sondern auch bei den anderen Ausführungsformen insbesondere auch oder im wesentlichen als dem Auslaßventil 8 bzw. Ventilelement 24 zugeordnetes Schließ- bzw. Rückstellelement. Der Begriff "Anschlag" ist vorzugsweise dementsprechend generell auch in diesem Sinne zu verstehen.

Der Anschlag 28 ist vorzugsweise an einem seitlichen oder unteren Ende des Betätigungselements 9 angeordnet bzw. gebildet. Jedoch sind auch andere konstruktive Lösungen möglich.

Bei der sechsten Ausführungsform ist das Ventilelement 24 bzw. Auslaßventil 8 vorzugsweise im wesentlichen entsprechend der fünften Ausführungsform ausgebildet. Jedoch kann die Wandung 14 bzw. das Bauteil 5 im Bereich des aufliegenden Ventilelements 24 auch zumindest im wesentlichen eben, insbesondere also nicht nutartig, ausgebildet sein.

Bei der sechsten Ausführungsform ist das Betätigungselement 9 im Gegensatz zur dritten Ausführungsform vorzugsweise am Gehäuseteil 4 und nicht am Bauteil 5 drehbar gelagert. Jedoch ist dies grundsätzlich auch möglich.

Bei der sechsten Ausführungsform bildet das Gehäuseteil 4 vorzugsweise durch entsprechende seitliche Vorsprünge oder dergleichen die Halteabschnitte 11, wie in Fig. 10 angedeutet. Jedoch sind auch andere konstruktive Lösungen möglich.

Fig. 11 veranschaulicht eine bevorzugte Ausbildung der Lagerabschnitte 10 als Lageraugen am Betätigungselement 9. Beim Aufsetzen des Betätigungselements 9 auf die Abgabevorrichtung 1 bzw. das Bauteil 5 können die Halteabschnitte 11 seitlich in die von den Lagerabschnitten 10 gebildeten Lageraugen einrasten bzw. eingreifen, so daß sich eine einfache Montage ergibt. Jedoch sind hier auch andere konstruktive Lösungen möglich.

Die schematisch nur in Fig. 11 angedeutete Schwenkachse 29 liegt insbesondere näher am Anschlag 28 als am die Rückstellung des Anschlags 28 bewirkenden Federabschnitt 6, um eine möglichst große Rückstellkraft ausüben zu können.

Das Betätigungselement 9 ist hier wippenartig bzw. hebelartig ausgebildet, so daß bei Betätigung der Abgabevorrichtung durch Niederdrücken eines Bereichs des Betätigungselements 9 ein anderer Bereich bzw. der Anschlag 28 angehoben und/oder vom Ventilelement 24 abgerückt wird. Jedoch sind hier auch andere konstruktive Lösungen möglich.

Der Anschlag 28 ist vorzugsweise abgerundet und/oder nur sehr schmal bzw. als Kante ausgebildet, um einen zumindest im wesentlichen nur linienförmigen Kontakt und/oder hohen Anpreßdruck auf das Ventilelement 24 ausüben zu können.

Vorzugsweise erstreckt sich der Anschlag 28 über die gesamte Breite des "virtuellen Auslaßkanals", der sich zwischen dem Bauteil 5 und dem Ventilelement 24 bilden kann, oder sogar noch seitlich darüber hinaus.

Bei zumindest im wesentlichen ebener Ausbildung des Bauteils 5 bzw. der Wandung 14 im Bereich des aufliegenden Ventilelements 24 kann der Anschlag 28 vorzugsweise entsprechend zumindest im wesentlichen als gerade Kante bzw. geradlinig verlaufender Rand oder dergleichen ausgebildet sein.

Die verschiedenen Ausführungsformen sowie einzelne Merkmale und konstruktive Lösungen der Ausführungsformen können auch beliebig miteinander kombiniert und/oder bei sonstigen Abgabevorrichtungen eingesetzt werden.

### Bezugszeichenliste:

- 1: Abgabevorrichtung
- 2: Flüssigkeit
- 3: Behälter
- 4: Gehäuseteil
- 5: Bauteil
- 6: Federabschnitt
- 7: Rand
- 8: Auslaßventil
- 9: Betätigungselement
- 10: Lagerabschnitte
- 11: Halteabschnitt
- 12: Abgabekanal
- 13: Verbindungsteil
- 14: Wandung (Bauteil)
- 15: erstes Material
- 16: zweites Material
- 17: Bereich (Vorbehandlung, Verbindung)
- 18: Abgabeventil
- 19: Anschlußabschnitt
- 20: Stutzen
- 21: Abschnitt
- 22: Durchbrechung
- 23: Steigleitung
- 24: Bauteil / Ventilelement
- 25: Ausläßöffnung
- 26: Vorsprung
- 27: Abgabeende
- 28: Anschlag
- 29: Schwenkachse
- 30: Betätigungsabschnitt
- 31: Betätigungsbereich
- 32: Ringwulst
- 33: Halteteil
- 34: Sollbruchstelle
- 35: Rand
- 36: Nut

## Patentansprüche

1. Abgabevorrichtung (1) zur Abgabe einer vorzugsweise kosmetischen Flüssigkeit (2), mit einem Ventil, insbesondere einem Auslaßventil (8), das ein elastisch verformbares Ventilelement (24) aufweist,
wobei das Ventilelement (24) an eine Wandung (14) angespritzt ist und/oder darauf bei geschlossenem Ventil vollflächig oder flachseitig aufliegt, und wobei die Abgabevorrichtung (1) ein Betätigungselement (9) aufweist,
**dadurch gekennzeichnet,**
**dass** die Abgabevorrichtung (1) einen Anschlag (28) aufweist, der das Ventilelement (24) bei geschlossenem Ventil in die Schließstellung drückt oder vorspannt, dass der Anschlag (28) am Betätigungselement (9) angebracht ist, und dass das Betätigungselement (9) wippenartig bzw. hebelartig ausgebildet ist, so dass bei Betätigung der Abgabevorrichtung (1) durch Niederdrücken eines Bereichs des Betätigungselements (9) der Anschlag (28) angehoben wird.

2. Abgabevorrichtung nach Anspruch 1, **dadurch gekennzeichnet, daß** die Wandung (14) eine zumindest im wesentlichen ebene Oberfläche bildet, auf der das Ventilelement (24) abhebbar aufliegt und/oder mit der das Ventilelement (24) bereichsweise fest oder flächig verbunden ist.

3. Abgabevorrichtung nach Anspruch 1 oder 2, **dadurch gekennzeichnet, daß** das Ventilelement (24) eine in der Wandung (14) bzw. einem Bauteil (5) gebildete Auslaßöffnung (25) flachseitig abdeckt.

4. Abgabevorrichtung nach Anspruch 3, **dadurch gekennzeichnet, daß** das Ventil durch elastische Verformung des Ventilelements (24) quer zur Auslaßöffnung (25) öffnet.

5. Abgabevorrichtung nach Anspruch 3 oder 4, **dadurch gekennzeichnet, daß** das Ventilelement (24) insbesondere ausschließlich in einem Bereich (17) mit der Wandung (14) bzw. dem Bauteil (5) fest und/oder flächig verbunden ist, der ausgehend von der Auslaßöffnung (25) auf einer einem Abgabeende (27) der Abgabevorrichtung (1) entgegengesetzten Seite liegt.

6. Abgabevorrichtung nach einem der Ansprüche 3 bis 5, **dadurch gekennzeichnet, daß** durch elastische Verformung des Ventilelements (24) die Auslaßöffnung (25) zur Ausgabe der Flüssigkeit (2) oder eines davon gebildeten Produkts, wie eines Schaums, freigebbar ist.

7. Abgabevorrichtung nach einem der voranstehenden Ansprüche, **dadurch gekennzeichnet, daß** das Ventilelement (24) ausschließlich in einem ringförmigen oder U-förmigen Bereich (17) mit der Wandung (14) bzw. dem Bauteil (5) fest und/oder flächig verbunden sind.

8. Abgabevorrichtung nach einem der voranstehenden Ansprüche, **dadurch gekennzeichnet, daß** das Ventilelement (24) zumindest bereichsweise flächig auf der Wandung (14) bzw. dem Bauteil (5) aufliegt und die Flüssigkeit (2) bzw. ein davon gebildetes Produkt zwischen den beiden flächig aufliegenden Bereichen durch entsprechende elastische Verformung des Ventilelements (24) ausgebbar ist.

9. Abgabevorrichtung nach einem der voranstehenden Ansprüche, **dadurch gekennzeichnet, daß** das Betätigungselement (9) aufgerastet ist und/oder dass das Betätigungselement (9) über Lagerabschnitte (10) an der Abgabevorrichtung (1) schwenkbar gelagert ist.

10. Abgabevorrichtung nach einem der voranstehenden Ansprüche, **dadurch gekennzeichnet, daß** der Anschlag (28) bzw. das Betätigungselement (9) in seine Schließstellung vorgespannt ist, vorzugsweise mittels eines Federabschnitts (6), insbesondere wobei eine Schwenkachse des Betätigungselements (9) naher am Anschlag (28) als an dem die Rückstellung des Anschlags (28) bewirkenden Federabschnitt (6) liegt.

11. Abgabevorrichtung nach einem der voranstehenden Ansprüche, **dadurch gekennzeichnet, daß** der Anschlag (28) beweglich ausgebildet ist und mit einem bewegbaren, vorzugsweise manuell betätigbaren Betätigungselement (9) gekoppelt oder daran angeformt ist.

12. Abgabevorrichtung nach einem der voranstehenden Ansprüche, **dadurch gekennzeichnet, daß** der Anschlag (28) im Bereich eines insbesondere in das Freie mündenden Abgabeendes (27) der Abgabevorrichtung (1) bzw. des Ventilelements (24) angeordnet ist und/oder auf das Ventilelement (24) wirkt.

13. Abgabevorrichtung nach einem der voranstehenden Ansprüche, **dadurch gekennzeichnet, daß** die Abgabevorrichtung (1) zur nicht-sprühenden und/oder zur schäumenden Ausgabe der Flüssigkeit (2) ausgebildet ist.

14. Abgabevorrichtung nach einem der voranstehenden Ansprüche, **dadurch gekennzeichnet, daß** die Abgabevorrichtung (1) zur Ausgabe von Schaum oder Gel ausgebildet ist.

15. Abgabevorrichtung nach einem der voranstehenden Ansprüche, **dadurch gekennzeichnet, daß** die Abgabevorrichtung (1) einen Abgabekopf für die Flüssigkeit (2) bzw. ein davon gebildetes Produkt, wie Schaum oder Gel, aus einem unter Druck stehenden oder setzbaren Behälter (3) aufweist oder bildet, insbesondere wobei der Behälter (3) ein Abgabeventil (18) aufweist, mit dem der Abgabekopf verbunden ist.

## Claims

1. Dispensing device (1) for dispensing a preferably cosmetic liquid (2), with a valve, in particular an outlet valve (8), which comprises an elastically deformable valve element (24),
wherein the valve element (24) is injected onto a wall (14) and/or rests thereon with its entire surface or flat side when the valve is closed, and wherein the dispensing device (1) comprises an actuation element (9),
**characterized in**
**that** the dispensing device (1) comprises a stop (28) which presses or pretensions the valve element (24) into the closed position when the valve is closed, that the stop (28) is attached to the actuation element (9), and that the actuation element (9) is rocker-like and/or lever-like such that the stop (28) is moved upward when the dispensing device (1) is actuated by pushing down a region of the actuation element (9).

2. Dispensing device according to claim 1, **characterized in that** the wall (14) forms an at least substantially level surface on which the valve element (24) rests such that it can be lifted off and/or with which the valve element (24) is connected in areas firmly or flatly.

3. Dispensing device according to claim 1 or 2, **characterized in that** the valve element (24) covers an outlet opening (25) formed in the wall (14) and/or a component (5) with its flat side.

4. Dispensing device according to claim 3, **characterized in that** the valve opens through elastic deformation of the valve element (24) transversally to the outlet opening (25).

5. Dispensing device according to claim 3 or 4, **characterized in that** the valve element (24) is connected firmly and/or flatly with the wall (14) and/or the component (5), preferably exclusively in an area (17), the area (17) resting on a side opposite to a dispensing end (27) of the dispensing device (1) starting from the outlet opening (25).

6. Dispensing device according to any of claims 3 to 5, **characterized in that** through elastic deformation of the valve element (24) the outlet opening (25) can be released for dispensing of the liquid (2) or a product formed therefrom, such as a foam.

7. Dispensing device according to any of the preceding claims, **characterized in that** the valve element (24) is connected firmly and/or flatly with the wall (14) and/or the component (5) exclusively in an annular or U-shaped area (17).

8. Dispensing device according to any of the preceding claims, **characterized in that** the valve element (24) rests at least in areas flatly on the wall (14) and/or the component (5) and the liquid (2) and/or a product formed therefrom is dispensable between the two areas resting flatly through corresponding elastic deformation of the valve element (24).

9. Dispensing device according to any of the preceding claims, **characterized in that** the actuation element (9) is clamped on and/or that the actuation element (9) is mounted pivotable on the dispensing device (1) by means of mounting sections (10).

10. Dispensing device according to any of the preceding claims, **characterized in that** the stop (28) and/or the actuation element (9) is pretensioned into its closing position, preferably by means of a spring section (6), in particular wherein a pivot axis of the actuation element (9) lies closer to the stop (28) than to the spring section (6) which causes resetting of the stop (28).

11. Dispensing device according to any of the preceding claims, **characterized in that** the stop (28) is moveable and coupled with a moveable, in particular manually actuatable, actuation element (9) or is molded thereon.

12. Dispensing device according to any of the preceding claims, **characterized in that** the stop (28) is arranged in the area of a dispensing end (27) of the dispensing device (1) and/or of the valve element (24), the dispensing end (27) preferably emptying into the open, and/or acts on the valve element (24).

13. Dispensing device according to any of the preceding claims, **characterized in that** the dispensing device (1) is designed for the non-spraying and/or foaming dispensing of the liquid (2).

14. Dispensing device according to any of the preceding claims, **characterized in that** the dispensing device (1) is designed for dispensing of foam or gel.

15. Dispensing device according to any of the preceding claims, **characterized in that** the dispensing device (1) has or forms a dispensing head for the liquid (2) and/or a product formed therefrom, such as foam or gel, from a container (3) which is or can be pressurized, preferably wherein the container (3) comprises a dispensing valve (18) to which the dispensing head is connected.

## Revendications

1. Dispositif de distribution (1) pour la distribution d'un liquide (2) de préférence cosmétique, avec une soupape, plus particulièrement une soupape de purge (8), qui comprend un élément de soupape (24) déformable de manière élastique, l'élément de soupape (24) étant injecté sur une paroi (14) et/ou s'appuyant dessus sur toute sa surface ou sur le côté plat lorsque la soupape est fermée et le dispositif de distribution (1) comprenant un élément d'actionnement,
**caractérisé**
**en ce que** le dispositif de distribution (1) comprend une butée (28), qui comprime ou précontraint l'élément de soupape (24) dans la position de fermeture lorsque la soupape est fermée, en ce que la butée (28) est montée sur l'élément d'actionnement (9) et en ce que l'élément d'actionnement (9) est conçu sous la forme d'une bascule ou d'un levier, de façon à ce que, lors de l'actionnement du dispositif de distribution (1), la butée (28) est soulevée en comprimant une zone de l'élément d'actionnement (9) vers le bas.

2. Dispositif de distribution selon la revendication 1, **caractérisé en ce que** la paroi (14) forme une surface au moins essentiellement plate sur laquelle l'élément de soupape (24) s'appuie de façon à pouvoir être soulevé et/ou avec laquelle l'élément de soupape (24) est relié partiellement de manière fixe ou sur sa surface.

3. Dispositif de distribution selon la revendication 1 ou 2, **caractérisé en ce que** l'élément de soupape (24) recouvre, sur le côté plat, une ouverture de purge (25) formée dans la paroi (14) ou dans un composant (5).

4. Dispositif de distribution selon la revendication 3, **caractérisé en ce que** la soupape s'ouvre par déformation élastique de l'élément de soupape (24) transversalement par rapport à l'ouverture de purge (25).

5. Dispositif de distribution selon la revendication 3 ou 4, **caractérisé en ce que** l'élément de soupape (24) est relié, plus particulièrement exclusivement dans une zone (17) avec la paroi ou le composant (5) de manière fixe et/ou sur sa surface, qui se trouve, à partir de l'ouverture de purge (25), sur un côté opposé à une extrémité de distribution (27) du dispositif de distribution (1).

6. Dispositif de distribution selon l'une des revendications 3 à 5, **caractérisé en ce que**, par déformation élastique de l'élément de soupape (24), l'ouverture de purge (25) peut être libérée pour la distribution du liquide (2) ou d'un produit constitué de celui-ci, comme une mousse.

7. Dispositif de distribution selon l'une des revendications précédentes, **caractérisé en ce que** l'élément de soupape (24) est relié, exclusivement dans une zone annulaire ou en forme de U (17), avec la paroi (14) ou le composant (5) de manière fixe et/ou de manière plane.

8. Dispositif de distribution selon l'une des revendications précédentes, **caractérisé en ce que** l'élément de soupape (24) s'appuie au moins partiellement de manière plane sur la paroi (14) ou le composant (5) et le liquide (2) ou un produit constitué de celui-ci peut être distribué entre les deux zones s'appuyant de manière plane par déformation élastique correspondante de l'élément de soupape (24).

9. Dispositif de distribution selon l'une des revendications précédentes, **caractérisé en ce que** l'élément d'actionnement (9) est encliqueté et/ou **en ce que** l'élément d'actionnement (9) est logé de manière pivotante sur le dispositif de distribution (1) par l'intermédiaire de portions de paliers (10).

10. Dispositif de distribution selon l'une des revendications précédentes, **caractérisé en ce que** la butée (28) ou l'élément d'actionnement (9) est précontrainte dans sa position de fermeture, de préférence au moyen d'une portion à ressort (6), plus particulièrement un axe de pivotement de l'élément d'actionnement (9) se trouvant plus près de la butée (28) que de la portion à ressort (6) provoquant le rappel de la butée (28).

11. Dispositif de distribution selon l'une des revendications précédentes, **caractérisé en ce que** la butée (28) est conçue de manière mobile et est couplée avec un élément d'actionnement (9) mobile, actionnable de préférence manuellement ou est moulée dessus.

12. Dispositif de distribution selon l'une des revendications précédentes, **caractérisé en ce que** la butée (28) est disposée dans la zone d'une extrémité de distribution (27) du dispositif de distribution (1) ou de l'élément de soupape (24), qui débouche plus particulièrement à l'air libre et/ou agit sur l'élément de soupape (24).

13. Dispositif de distribution selon l'une des revendications précédentes, **caractérisé en ce que** le dispositif de distribution (1) est conçu pour la distribution sans pulvérisation et/ou avec moussage du liquide (2).

14. Dispositif de distribution selon l'une des revendications précédentes, **caractérisé en ce que** le dispositif de distribution (1) est conçu pour la distribution d'une mousse ou d'un gel.

15. Dispositif de distribution selon l'une des revendications précédentes, **caractérisé en ce que** le dispositif de distribution (1) comprend ou forme une tête de distribution pour le liquide (2) ou un produit constitué de celui-ci, comme une mousse ou un gel, à partir d'un récipient (3) sous pression ou pouvant être mis sous pression, plus particulièrement le récipient (3) comprenant une soupape de distribution (18) avec laquelle la tête de distribution est reliée.
